# EUROPÄISCHE PATENTSCHRIFT

(11) **EP 3 587 838 B1**
(45) Veröffentlichungstag und Bekanntmachung des Hinweises auf die Patenterteilung: **29.09.2021**
(21) Anmeldenummer: 19175189.0
(22) Anmeldetag: 17.05.2019
(51) Int. Cl.: F16B 13/06

(54) **DÜBEL MIT SPREIZSTEGEN ZUM VERKNOTEN UND MIT SPREIZSTEGEN ZUM UMKLAPPEN**
DOWEL WITH EXPANDING BARS FOR KNOTTING AND WITH EXPANDING BARS FOR FOLDING DOWN
GOUJON POURVU DE BRIDES EXPANSIBLES DESTINÉES AU NOUAGE ET DE BRIDES EXPANSIBLES DESTINÉES AU PLIAGE

(30) Priorität: 29.06.2018 DE 102018115862
(43) Veröffentlichungstag der Anmeldung: 01.01.2020
(73) Patentinhaber: Adolf Würth GmbH & Co. KG, 74653 Künzelsau (DE); Würth International AG, 7000 Chur (CH)
(72) Erfinder: Wieland, Achim, 74211 Leingarten (DE)
(74) Vertreter: Dilg, Haeusler, Schindelmann Patentanwaltsgesellschaft mbH

(56) Entgegenhaltungen:
- EP-A2- 2 119 920

## Beschreibung

Die Erfindung betrifft einen Dübel, ein Verfahren zum Herstellen eines Dübels, ein Montagekit, eine Montageanordnung und ein Verfahren zum Montieren eines Dübels.

Ein Dübel ist ein in der Verbindungstechnik gebrauchtes Bauteil. Er wird bei Werkstoffen angewendet, in die sich eine Schraube nicht unmittelbar eindrehen lässt. Dübel werden in ein zylindrisches Loch in gemauerte, betonierte oder mit Platten versehene Wände, Decken oder Böden als Zwischenteil eingesetzt. Beim Eindrehen der Schraube spreizt sich der Dübel. Durch Kraftschluss zwischen Dübel und umgebendem Material und manchmal mit Formschluss ist die Schraube gegen Herausziehen gesichert.

Aktuelle Dübel verankern sich in Plattenmaterialien entweder durch Verknoten oder durch aufspreizende Stützelemente.

Wenngleich herkömmliche Dübel für verschiedene Anwendungen sehr leistungsstark sind, kann es in einigen Fällen zu einer unzureichenden Verankerungskraft kommen.

EP 2 119 920 A2 offenbart einen Dübel gemäß dem Oberbegriff von Anspruch 1, ein Verfahren gemäß dem Oberbegriff 8 von Anspruch zum Herstellen eines Dübels, ein Verfahren gemäß dem Oberbegriff von Anspruch 11 zum Montieren des Dübels, ein Montagekit gemäß dem Oberbegriff von Anspruch 12 und eine Montageanordnung gemäß dem Oberbegriff von Anspruch 13.

Es ist eine Aufgabe der vorliegenden Erfindung, einen Dübel bereitzustellen, der in einen Untergrund mit einer hohen Verankerungskraft gesetzt werden kann.

Diese Aufgabe wird durch die Gegenstände gemäß den unabhängigen Patentansprüchen gelöst. Bevorzugte Ausgestaltungen ergeben sich aus den abhängigen Patentansprüchen.

Gemäß einem Ausführungsbeispiel der vorliegenden Erfindung ist ein Dübel zum Einbringen in einen Untergrund geschaffen, aufweisend einen Fuß mit einer Öffnung zum Einführen eines Befestigungselements, einen Kopf und einen Spreizbereich zwischen dem Fuß und dem Kopf mit ersten Spreizstegen, die bei Einführen des Befestigungselements in die Öffnung (und insbesondere beim Einführen des Befestigungselements bis in den Kopf hinein) zum Verknoten in dem Untergrund (insbesondere in einem Hohlraum des Untergrunds) ausgebildet sind, und mit zweiten Spreizstegen, die bei Einführen des Befestigungselements in die Öffnung (und insbesondere beim Einführen des Befestigungselements bis in den Kopf hinein) zum Umklappen in dem Untergrund (insbesondere in einem Hohlraum des Untergrunds) ausgebildet sind.

Gemäß einem anderen Ausführungsbeispiel der vorliegenden Erfindung ist ein Verfahren zum Herstellen eines Dübels zum Einbringen in einen Untergrund bereitgestellt, wobei das Verfahren ein Bilden eines Fußes mit einer Öffnung zum Einführen eines Befestigungselements, ein Bilden eines Kopfs, und ein Bilden eines Spreizbereichs zwischen dem Fuß und dem Kopf unter Ausbildung von ersten Spreizstegen, die bei Einführen des Befestigungselements in die Öffnung (und insbesondere beim Einführen des Befestigungselements bis in den Kopf hinein) zum Verknoten in dem Untergrund (insbesondere in einem Hohlraum des Untergrunds) ausgebildet sind, und von zweiten Spreizstegen aufweist, die bei Einführen des Befestigungselements in die Öffnung (und insbesondere beim Einführen des Befestigungselements bis in den Kopf hinein) zum Umklappen in dem Untergrund (insbesondere in einem Hohlraum des Untergrunds) ausgebildet sind.

Gemäß noch einem anderen Ausführungsbeispiel der vorliegenden Erfindung ist ein Verfahren zum Montieren eines Dübels mit den oben beschriebenen Merkmalen in einem Untergrund bereitgestellt, wobei das Verfahren bei einem (insbesondere drehenden) Einführen des Befestigungselements (insbesondere einer Schraube) in die Öffnung (und insbesondere beim Einführen des Befestigungselements bis in den Kopf hinein) ein Verknoten der ersten Spreizstege in dem Untergrund (insbesondere in einem Hohlraum des Untergrunds), und ein Umklappen der zweiten Spreizstege in dem Untergrund (insbesondere in einem Hohlraum des Untergrunds) aufweist.

Gemäß noch einem anderen Ausführungsbeispiel der vorliegenden Erfindung ist ein Montagekit geschaffen, das einen Dübel mit den oben beschriebenen Merkmalen und ein Befestigungselement zum Einführen in den Dübel aufweist.

Gemäß noch einem anderen Ausführungsbeispiel der vorliegenden Erfindung ist eine Montageanordnung bereitgestellt, die ein Montagekit mit den oben beschriebenen Merkmalen und einen Untergrund aufweist, wobei der Dübel in den Untergrund eingeführt ist und das Befestigungselement in den Dübel eingeführt ist.

Im Rahmen dieser Anmeldung kann unter dem Begriff "Untergrund" insbesondere ein zum Verankern des Dübels und des Befestigungselements geeigneter Körper verstanden werden. Ein solcher Untergrund oder Verankerungsgrund kann insbesondere eine Wand, weiter insbesondere eine vertikale Wand, sein. Materialien für einen solchen Untergrund sind insbesondere Holz oder Holzbaustoffe, oder aber auch Beton- und Mauerwerksbaustoffe, Metall oder Kunststoffbauteile. Ferner kann ein solcher Untergrund auch ein beliebiger Kompositwerkstoff aus mehreren unterschiedlichen Materialkomponenten sein.

Im Rahmen dieser Anmeldung kann unter dem Begriff "Hohlkörper" insbesondere ein Untergrund verstanden werden, der im Inneren (insbesondere in einem Eindringbereich des Dübels und des Befestigungselements in den Untergrund) - zusätzlich zu einer Aufnahmeöffnung (zum Beispiel ein Bohrloch) zum Aufnehmen des Dübels - eine oder mehrere Hohlkammern, das heißt materialfreie Bereiche, aufweist (oder in für die Befestigungswirkung signifikantem Maße aufweist). Ein solcher Hohlkörper kann eine reguläre Anordnung von Hohlkammern enthalten, beispielsweise gezielt vorgesehene Löcher in einem Mauerwerkstein. Auch ein poröser Körper kann als Hohlkörper angesehen werden. Konkrete Beispiele für Hohlkörper sind Porenbeton, Hochlochziegelsteine oder poriger Leichtbeton. Auch eine Platte (zum Beispiel eine Holz- oder Gipsplatte), hinter der ein Hohlraum angeordnet ist, kann einen solchen Hohlkörper bilden bzw. begrenzen.

Gemäß einem exemplarischen Ausführungsbeispiel der Erfindung ist ein Dübel geschaffen, der zwischen einem Fuß und einem Kopf erste und zweite Spreizstege mit unterschiedlichen Spreizeigenschaften aufweist. Während die ersten Spreizstege beim vorzugsweise drehenden Einführen eines Befestigungselements in den in einen Untergrund eingebrachten Dübel (insbesondere bis in den Dübelkopf hinein und ggf. darüber hinaus) sich in dem Untergrund (insbesondere in einem Hohlraum desselben) verknoten können, vollführen die zweiten Spreizstege in dem beschriebenen Szenario gleichzeitig ein Umklappen in dem Hohlraum, vorzugsweise zum Anliegen an eine Innenfläche des Untergrunds. Durch diese doppelte Spreizwirkung ist eine besonders gute Verankerung des Hybriddübels im Untergrund ermöglicht, selbst und gerade dann, wenn der Untergrund erhebliche Hohlräume aufweist. Dies kann zum Beispiel dadurch erreicht werden, dass die ersten Spreizstege kopf- und fußseitig verbunden werden und infolgedessen beim Setzvorgang gegeneinander verdreht oder verdrillt werden können und sich dabei gegenseitig verknoten. Beispielsweise durch eine fußseitige Kopplung der zweiten Spreizstege des Dübels bei einem gegenüber den zweiten Spreizstegen frei drehend gelagertem Kopf des Dübels kann dafür gesorgt werden, dass der Kopf beim Setzen des Befestigungselements auf die zweiten Spreizstege eine diese umklappende Kraft ausübt.

Im Weiteren werden zusätzliche Ausführungsbeispiele des Dübels, des Montagekits, der Montageanordnung und der Verfahren beschrieben.

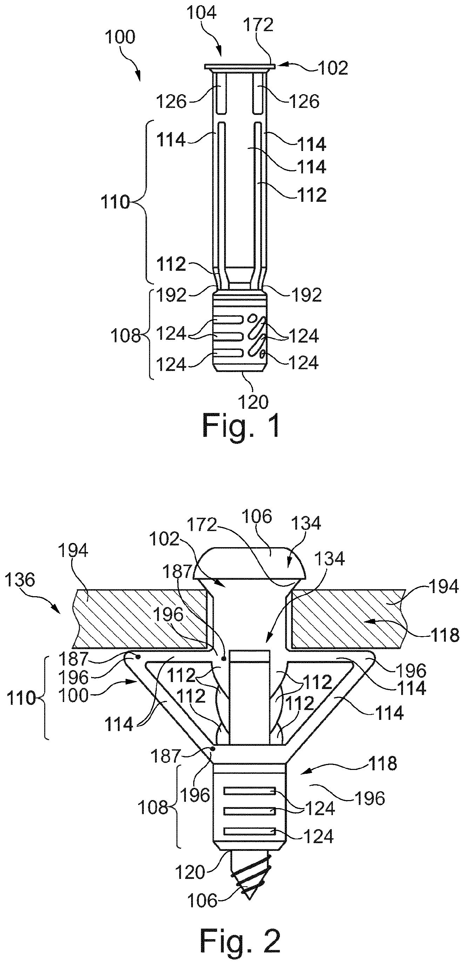

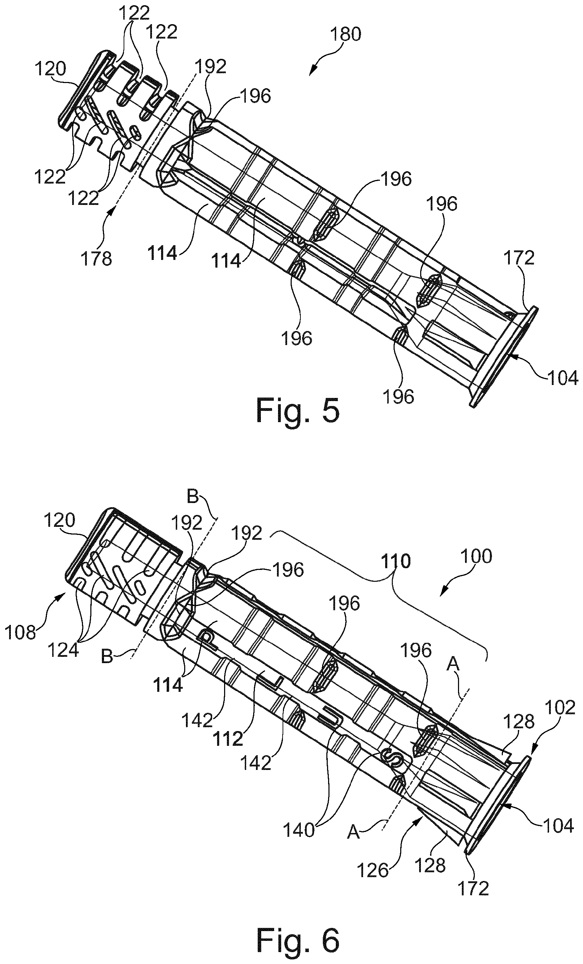

Gemäß einem Ausführungsbeispiel kann der Dübel aus einer ersten Spritzgusskomponente und einer zweiten Spritzgusskomponente gebildet sein. Ferner kann an einer Trennstelle eine mechanische Trennung zwischen den zweiten Spreizstegen und einer von der zweiten Spritzgusskomponente gebildeten Komponente des Kopfs gebildet sein. Diese physische Trennung zwischen dem Kopf des Dübels und den zweiten Spreizstegen der zweiten Spritzgusskomponente (vergleiche Figur 5) bewirkt, dass beim Eindrehen einer Schraube der Kopf mit der Schraube mitdreht, nicht jedoch die zweiten Spreizstege. Dadurch wird der Kopf zum Fuß gezogen, wodurch die zweiten Spreizstege rein axial längsverschoben werden, ohne mitgedreht zu werden. Dieser Mitdrehschutz der zweiten Spreizstege führt zu einem Umklappen der zweiten Spreizstege (insbesondere zu einem Ausbilden umgeklappter Dreiecke gemäß Figur 2).

Gemäß einem Ausführungsbeispiel können die ersten Spreizstege fest mit dem Fuß und fest mit dem Kopf verbunden sein. Durch das Verbinden der Gruppe der ersten Spreizstege am Kopf und am Fuß kann die Verknotbarkeit der ersten Spreizstege beim Einführen eines Befestigungselements in den Dübel gefördert werden, der bereits in einen als Hohlkörper ausgebildeten Untergrund gesetzt worden ist. Wenn der Fuß verdrehgeschützt wird und der Kopf beim Eindrehen einer Schraube als Befestigungselement mitdreht, wird auf die beidseitig angebundenen ersten Spreizstege anschaulich eine diese verknotende Drehkraft ausgeübt. Die gruppenweise Verbindung der ersten Spreizstege am Kopf bzw. Fuß des Dübels kann zum Beispiel stoffschlüssig erfolgen, indem die genannten Strukturen integral ausgebildet werden (zum Beispiel mittels Spritzgießens). Auch eine chemische Verbindung der Gruppe von ersten Spreizstegen am Kopf und/oder Fuß ist möglich. Alternativ oder ergänzend können die ersten Spreizstege am Kopf und/oder Fuß auch mittels einer mechanischen Verzahnung unter Ausbildung eines Formschlusses miteinander verbunden werden.

Gemäß einem Ausführungsbeispiel können die ersten Spreizstege derart mit dem Fuß und mit dem Kopf und vorzugsweise auch miteinander verbunden sein, dass bei einem drehenden Einführen des Befestigungselements in die Öffnung und bis in den Kopf hinein der Kopf mitdreht und dadurch die ersten Spreizstege verknoten. Auf diese Weise kann ein das Verknoten auslösendes Drehmoment auf die ersten Spreizstege ausgeübt werden.

Gemäß einem Ausführungsbeispiel können die zweiten Spreizstege fest mit dem Fuß verbunden sein, aber gegenüber dem Kopf drehbar ausgebildet sein. Diese Konfiguration bewirkt ein Umklappen der zweiten Spreizstege beim Setzvorgang, wenn der Kopf beim Einbringen des Befestigungselements zu dem Fuß gezogen wird und die kopfseitig freien (und somit vor Verknotung geschützten) Enden der zweiten Spreizstege mitnimmt. Die zweiten Spreizstege werden dadurch verbogen und weichen der zugehörigen Kraft durch Umklappen aus.

Gemäß einem Ausführungsbeispiel können die zweiten Spreizstege so ausgebildet sein (zum Beispiel durch ein entsprechendes Anordnen von Sollknickstellen), dass ein jeweiliges zweites Spreizelement nach einem Umklappen gemeinsam mit einer Dübelachse ein sich radial nach außen erstreckendes Dreieck ausbildet. Anders ausgedrückt wird das genannte Dreieck durch zwei Teilstücke eines jeweiligen zweiten Spreizstegs und ein Stück der Dübelachse gebildet.

Gemäß einem Ausführungsbeispiel können die zweiten Spreizstege derart mit dem Fuß verbunden sein und von dem Kopf getrennt sein, dass bei einem drehenden Einführen des Befestigungselements in die Öffnung und dann in den Kopf des Dübels der Kopf axial in Richtung des Fußes gezogen wird und dadurch die zweiten Spreizstege einer Umklappkraft ausgesetzt werden. Insbesondere wenn der Fuß mit einer Verdrehsicherung ausgestattet ist und der Kopf im Gegensatz zu dem Fuß nicht mit den zweiten Spreizstegen verbunden ist, führt ein Einführen des Befestigungselements in die Öffnung auch zu einem Einführen in den Kopf, der daraufhin in Richtung des Fußes gezogen wird. Dadurch wird eine Klappkraft auf die zweiten Spreizstege ausgeübt.

Gemäß einem bevorzugten Ausführungsbeispiel kann der Kopf gegenüber den zweiten Spreizstegen frei drehbar gelagert sein. Dann kann der Kopf mitdrehen, wenn das Befestigungselement beim Einführen in den Dübel den Kopf durchstößt. Dies wiederum kann das Umklappen der zweiten Spreizstege wirksam fördern.

Gemäß einem Ausführungsbeispiel kann ein frei drehbarer Bereich zwischen den zweiten Spreizstegen und dem Kopf lokal mechanisch geschwächt sein, insbesondere weicher ausgebildet sein als angrenzende Bereiche des Dübels. Somit kann ein frei drehbarer Bereich lokal weicher ausgebildet sein, insbesondere aus Weichkunststoff ausgebildet sein. Dies ermöglicht ein einfaches Einführen (insbesondere Eindrehen) des Befestigungselements (insbesondere einer Schraube), sodass keine übermäßigen Kräfte (besonders keine übermäßigen Drehmomente) wirken.

Gemäß einem Ausführungsbeispiel kann der Dübel als Hohlraumdübel ausgebildet sein. Anders ausgedrückt kann der Dübel dazu ausgebildet sein, in einen als Hohlraum ausgebildeten Untergrund eingeführt zu werden und dort eine große Haltekraft zu bewirken. Die Befestigung an Wänden und Decken aus Plattenbaustoffen und in Hohldecken kann mithilfe eines solchen Hohlraumdübels bewerkstelligt werden.

Gemäß einem Ausführungsbeispiel kann der Dübel Kunststoff aufweisen oder aus Kunststoff bestehen. Mit der beschriebenen Konfiguration eines Kunststoffdübels, die eine Kombination aus einem Verknoten und einem Umklappen von Spreizelementen unterschiedlicher Ausbildung ermöglicht, kann eine einfache Herstellbarkeit mit einer hohen Auszugskraft kombiniert werden.

Gemäß einem anderen Ausführungsbeispiel kann der Kopf ein Metall aufweisen oder daraus bestehen, und kann insbesondere ein Rest des Dübels Kunststoff aufweisen oder daraus bestehen. Ein Kopf aus Metall ermöglicht eine besonders zuverlässige Auslösung des Verknotens und Umklappens der Spreizstege bei Eindringen des drehenden Befestigungselements in den mitdrehenden Kopf.

Gemäß einem Ausführungsbeispiel können die zweiten Spreizstege eine oder mehrere Sollknickstellen aufweisen, an der oder denen das Umklappen erfolgt. Insbesondere können drei Sollknickstellen pro zweitem Spreizsteg vorgesehen sein, nämlich eines im Grenzbereich zum Kopf, ein zweites im Grenzbereich zum Fuß und ein drittes zwischen den beiden ersten zum Definieren von zwei strebenartigen Teilstücken. Zum Beispiel kann eine entsprechende Sollknickstelle die Länge eines jeweiligen zweiten Spreizstegs in ein längeres Teilstück und in ein kürzeres Teilstück aufteilen. Zum Beispiel kann die Sollknickstelle die Gesamtlänge des zweiten Spreizstegs im Verhältnis 2/3 zu 1/3 aufteilen. Das kürzere Teilstück kann sich nach dem Umklappen an eine Rückwand einer Platte anlegen, wohingegen sich das längere Teilstück vom Fuß (insbesondere von einem radial aufgeweiteten Kragen am Fuß) bis zu dem kürzeren Teilstück hin axial geneigt erstrecken kann. Alternativ können die beiden Teilstücke auch gleich lang ausgebildet sein. Ein Längenverhältnis des beiden Teilstücke kann zum Beispiel in einem Bereich zwischen 1 und 2 liegen. Die genannte(n) Sollknickstelle(n) kann/können als gezielte mechanische Schwächung an einer bestimmten Position eines jeweiligen zweiten Spreizstegs ausgebildet sein, an der ein Umklappen erfolgen soll. Dadurch kann die Funktionalität der zweiten Spreizstege besonders zuverlässig vorgegeben werden. Zum Beispiel kann eine solche Sollschnittstelle als lokale Verdünnung bzw. Verjüngung der zweiten Spreizstege an einer Innenseite und/oder einer Außenseite des Dübels ausgebildet sein.

Gemäß einem Ausführungsbeispiel können die zweiten Spreizstege radial weiter außen angeordnet sein als die ersten Spreizstege. Die radiale Anordnung der zweiten Spreizstege außerhalb der ersten Spreizstege bewirkt beim Eindrehen eine besonders hohe Umklappkraft aufgrund einer erhöhten Hebelwirkung. Außerdem kann dadurch ein Verknoten der ersten Spreizstege und ein Umklappen der zweiten Spreizstege räumlich entkoppelt werden und folglich ein störungsfreies Setzen des Dübel gefördert werden.

Gemäß einem Ausführungsbeispiel kann der Dübel eine, insbesondere ringförmige, Engstelle zwischen dem Kopf und dem Spreizbereich aufweisen. Diese Engstelle kann anschaulich mit dem freidrehenden Lager zwischen Kopf und Spreizstegen zusammenfallen. Es ist möglich, dass an der Position der Engstelle die ersten Spreizstege mit dem Kopf verbunden sind. Die zweiten Spreizstege hingegen sind an der Engstelle nicht mit dem Kopf verbunden.

Gemäß einem Ausführungsbeispiel können die ersten Spreizstege und die zweiten Spreizstege aus unterschiedlichen Materialien oder aus dem gleichen Material hergestellt sein. Wenn die ersten Spreizstege und die zweiten Spreizstege aus unterschiedlichen Materialien hergestellt sind, kann die jeweilige Materialwahl in Einklang mit der jeweiligen Funktion der ersten Spreizstege bzw. der zweiten Spreizstege erfolgen. Wenn die ersten Spreizstege und die zweiten Spreizstege aus demselben Material hergestellt sind, können gegebenenfalls unerwünschte Materialbrücken vermieden und etwaige Probleme mit unterschiedlichen Wärmeausdehnungskoeffizienten und dergleichen vermieden werden.

Gemäß einem Ausführungsbeispiel können die ersten Spreizstege und die zweiten Spreizstege in Umfangsrichtung alternierend angeordnet sein. Mit anderen Worten können sich in Umfangsrichtung jeweils ein erster Spreizsteg und ein zweiter Spreizsteg abwechseln. Dadurch ist eine sehr homogene Krafteinleitung von dem Dübel in den Untergrund ermöglicht.

Gemäß einem Ausführungsbeispiel können die ersten Spreizstege und die zweiten Spreizstege zueinander formschlüssig ausgebildet sein. Eine Außenfläche des Spreizbereichs kann dann vorzugsweise vollständig geschlossen bzw. lückenfrei sein. Auf diese Weise ist ein leicht handhabbarer und kompakter Dübel mit universeller Einsetzbarkeit in unterschiedlichen Untergründen geschaffen.

Gemäß einem Ausführungsbeispiel können die ersten Spreizstege und die zweiten Spreizstege eine unterschiedliche Flexibilität (oder eine unterschiedliche Rigidität) oder eine unterschiedliche Elastizität (d.h. ein unterschiedliches Elastizitätsmodul) aufweisen. Zum Beispiel können die ersten Spreizstege mechanisch flexibel oder elastisch und die zweiten Spreizstege rigide ausgebildet sein, oder umgekehrt. Auf diese Weise können die Eigenschaften des Dübels auf eine bestimmte Applikation hin angepasst werden.

Gemäß einem Ausführungsbeispiel kann der Spreizbereich in Umfangsrichtung spaltfrei geschlossen sein. Anschaulich weist gemäß der beschriebenen Ausführungsform der Spreizbereich keine Schlitze zwischen Spreizstegen auf und ist daher (zumindest im Wesentlichen) vollumfänglich geschlossen. Gemäß einem solchen bevorzugten Ausführungsbeispiel kann der Dübel entlang seines gesamten Umfangs oder zumindest im Wesentlichen entlang seines gesamten Umfangs von Zwischenräumen frei sein, bevor das Befestigungselement in die Öffnung des Dübels eingeführt wird. Auf diese Weise ist es möglich, mittels der Spreizstege entlang des gesamten Umfangs des Dübels eine möglichst hohe Befestigungskraft beizutragen.

Gemäß einem Ausführungsbeispiel des Dübels kann der Kopf vor Einbringen des Befestigungselements in den Dübel geschlossen sein. Anschaulich kann der Kopf als geschlossene Kappe ausgebildet sein. Auf diese Weise kann vermieden werden, dass Bohrmehl, Schmutz, etc. in die Öffnung des Dübels zum Aufnehmen des Befestigungselements eindringt.

Gemäß einem Ausführungsbeispiel kann der Kopf eine Sollbruchstelle aufweisen, die bei Einbringen eines Befestigungselements in den Dübel unter Öffnung des Kopfes aufgebrochen werden kann bzw. aufzubrechen ist. Zum Beispiel kann in einer Stirnfläche des Kopfs eine (beispielsweise kreuzförmige) Opferstruktur integriert werden, die an der (zum Beispiel umlaufenden) Sollbruchstelle vom Rest des beispielsweise kappenförmigen Kopfes umgeben ist.

Gemäß einem Ausführungsbeispiel kann der Kopf Dehnungsfugen aufweisen, die ganz oder teilweise mit Rippen gefüllt sind. Die Dehnungsfugen können Aussparungen in einer Matrix sein, wohingegen die Rippen gemeinsam mit den ersten Spreizstegen gebildet werden können. Das Zusammenspiel der Dehnungsfugen mit den Rippen bewirkt, dass das Befestigungselement leicht in die Öffnung des Dübels eingeführt werden kann.

Gemäß einem Ausführungsbeispiel kann zumindest ein Teil der Dehnungsfugen eine von 90° zu einer Axialrichtung des Dübels abweichende Schrägwinkelstellung aufweisen. Durch die Schrägstellung von Dehnungsfugen und zugehörigen Rippen kann eine gewünschte Aufweitung des Durchmessers derselben ermöglicht werden, wenn das Befestigungselement in die Öffnung des Dübels eingeführt wird.

Gemäß einem Ausführungsbeispiel kann der Fuß eine Mitdrehsicherung aufweisen, insbesondere ausgebildet als in Umfangsrichtung außenseitig verteilt angeordnete und radial nach außen überstehende Dorne. Eine solche Mitdrehsicherung verunmöglicht oder unterdrückt, dass sich der Dübelfuß unerwünscht mitdreht, wenn ein zum Beispiel als Schraube ausgebildetes Befestigungselement in die Öffnung des Dübels eingedreht wird. Dadurch kann ein durch ein unerwünschtes Mitdrehen des Dübels beim Setzen des Befestigungselements einhergehender Verlust an Befestigungskraft des Dübels in dem Untergrund vermieden werden. Gleichzeitig kann ein ortsfester Fuß in Kombination mit einem mitdrehenden Kopf sowohl ein Verknoten der ersten Spreizstege als auch ein Umklappen der zweiten Spreizstege begünstigen.

Gemäß einem Ausführungsbeispiel können die ersten Spreizstege Teil einer ersten Spritzgusskomponente des Dübels sein und können die zweiten Spreizstege Teil einer auf die erste Spritzgusskomponente aufgespritzten zweiten Spritzgusskomponente des Dübels sein.

Gemäß einem anderen Ausführungsbeispiel können die ersten Spreizstege Teil eines ersten Steckelements des Dübels sein und die zweiten Spreizstege Teil eines auf das erste Steckelement aufgesteckten zweiten Steckelements des Dübels sein. Das erste Steckelement mit den ersten Spreizstegen und das zweite Steckelement mit den zweiten Spreizstegen können zunächst getrennt voneinander gebildet werden. Nachfolgend können das erste Steckelement und das zweite Steckelement mittels Ausbildens einer Steckverbindung zum Bilden des Dübels miteinander verbunden werden.

Gemäß einem Ausführungsbeispiel können der Kopf und/oder der Fuß ausgebildet sein, dass dort im Betrieb keine Spreizung erfolgt. Die beiden einander gegenüberliegenden Endbereiche des Dübels, die Fuß und Kopf bilden, können somit der Stabilität dienen, wohingegen ein dazwischen angeordneter Mittenbereich die doppelte Spreizfunktion des Hybriddübels verwirklicht.

Gemäß einem Ausführungsbeispiel kann das Verfahren ein Herstellen der Spreizstege aufweisen, bei dem zunächst erste Spreizstege gebildet werden und erst nachfolgend zweite Spreizstege gebildet werden. Zum Beispiel können die ersten Spreizstege als Rohling oder Teil eines Rohlings gebildet werden, dessen Zwischenräume dann durch Material der zweiten Spreizstege ausgefüllt werden können. Auf diese Weise können Bereiche des Dübels, die herkömmlich materialfrei sind, durch zusätzliche Spreizelemente, Spreizschenkel oder Spreizstege ausgefüllt werden, wodurch eine Befestigungskraft des Dübels in einem Untergrund erhöht werden kann.

Gemäß einem Ausführungsbeispiel können bei dem Verfahren die ersten Spreizstege mittels eines ersten Spritzgussverfahrens und nachfolgend die zweiten Spreizstege mittels eines nachfolgenden zweiten Spritzgussverfahrens hergestellt werden. Zwei aufeinanderfolgende Spritzgussverfahren sind besonders gut geeignet, den Spreizbereich mit getrennten Spreizstegen unterschiedlicher Funktionalität herzustellen.

Gemäß einem Ausführungsbeispiel können bei dem Verfahren die ersten Spreizstege mittels eines ersten Werkzeugs (insbesondere mittels eines ersten Spritzgusswerkzeugs) und nachfolgend die zweiten Spreizstege mittels eines anderen zweiten Werkzeugs (insbesondere mittels eines zweiten Spritzgusswerkzeugs) hergestellt werden. Es können also zwei unterschiedliche Spritzgusswerkzeuge zum Einsatz kommen, deren jeweilige Formgebung durch die durch sie auszubildenden Strukturmerkmale des Dübels festgelegt ist.

Gemäß einem Ausführungsbeispiel kann der Untergrund ein Hohlkörper sein, insbesondere eine Platte mit dahinter angeordnetem Hohlraum aufweisen. In einem solchen Untergrund ist ein Befestigen mittels einer kombinierten Verknotung und einem Umklappen von Spreizstegen eine besonders wirksame Befestigungsmöglichkeit.

Gemäß einem Ausführungsbeispiel kann ein Einbringen des Dübels und nachfolgend des Befestigungselements in den Untergrund nach Bilden einer Vorbohrung in dem Untergrund erfolgen. Insbesondere kann eine solche Vorbohrung die Platte als Durchgangsloch vollständig durchdringen. Der Dübel kann nachfolgend durch die Vorbohrung bis in den Hohlraum hinter der durchbohrten Platte eindringen. Das Verknoten und Umklappen der Spreizstege erfolgt dann gegen eine rückseitige Fläche der Platte, die einer äußeren Grenzfläche des Untergrunds gegenüberliegen kann.

Im Folgenden werden exemplarische Ausführungsbeispiele der vorliegenden Erfindung mit Verweis auf die folgenden Figuren detailliert beschrieben.
Figur 1 zeigt einen Dübel gemäß einem exemplarischen Ausführungsbeispiel der Erfindung vor einem Einsetzen in einen Untergrund und vor Einführen eines Befestigungselements in eine Öffnung des Dübels.
Figur 2 zeigt den Dübel gemäß Figur 1 nach einem Einsetzen in den Untergrund und nach Einführendes Befestigungselements in die Öffnung des Dübels.
Figur 3 zeigt eine räumliche Ansicht eines Dübels gemäß einem anderen exemplarischen Ausführungsbeispiel der Erfindung.
Figur 4 zeigt eine erste Spritzkomponente des Dübels gemäß Figur 3.
Figur 5 zeigt eine zweite Spritzkomponente des Dübels gemäß Figur 3.
Figur 6 zeigt eine Seitenansicht des Dübels gemäß Figur 3.
Figur 7 zeigt einen axialen Schnitt des Dübels gemäß Figur 3.
Figur 8 zeigt eine Schnittansicht des Dübels gemäß Figur 3 bis Figur 7 entlang einer in Figur 6 dargestellten Schnittebene A-A.
Figur 9 zeigt eine Schnittansicht des Dübels gemäß Figur 3 bis Figur 7 entlang einer in Figur 6 dargestellten Schnittebene B-B.
Figur 10 zeigt eine räumliche Ansicht in ein Inneres des Dübels gemäß Figur 3 bis Figur 9.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Bei einem herkömmlichen Hohlraumdübel aus Metall erfährt ein Dübelkopf nur eine Zugkraft in Richtung Dübelfuß, damit Spreizstege nach außen gebogen und nicht verdreht werden. Für diese Funktion muss ein leicht laufendes Gewinde im Dübelkopf vorhanden sein.

Bei einem herkömmlichen Hohlraumdübel aus Kunststoff hingegen kann der Eingriff einer Schraube in den Dübelkopf nur unzureichend ausgeführt werden, damit kein großes Drehmoment entsteht und damit der Dübel nicht fehlerhaft verknotet. Ein Verknoten eines Kunststoffdübels ist aber vorteilhaft, damit ein Befestigungselement (zum Beispiel eine Schraube) eng umschlungen und stabilisiert wird. Ein Hohlraumdübel aus Kunststoff soll im Dübelkopf stabil und massiv ausgeführt werden, damit die Schraube darin nicht überdreht. Jedoch sollen keine Drehmomente entstehen, damit der Dübelkopf kein Verdrehen, sondern nur eine Zugkraft erfährt.

Gemäß einem exemplarischen Ausführungsbeispiel der Erfindung ist ein Hohlraumdübel aus Kunststoff geschaffen, der sowohl ein Verknoten von ersten Spreizstegen als auch ein Umklappen von zweiten Spreizstegen in einem Hohlraum eines Untergrunds ermöglicht, wenn ein Befestigungselement (insbesondere eine Schraube) in den Dübel eingebracht (insbesondere eingedreht) wird. Dies führt zu einer besonders sicheren Verankerung und hohen Auszugskraft des Dübels.

Insbesondere ist es mit Spritzgusstechnik unter Verwendung von zwei Komponenten mit vertretbarem Aufwand möglich, eine mechanische Trennung zwischen Dübelkopf, Spreizstegen und Dübelfuß einzuführen. Bei einem solchen Spritzguss kann die erste Komponente durch zwei getrennte Anspritzpunkte nochmals in zwei getrennte Komponenten (insbesondere aus gleichem Material) geteilt werden. Dadurch kann der Dübelkopf mit Vorteil frei drehend auf abklappenden Spreizstegen gelagert werden.

Ein insbesondere als Allzweckdübel aus Kunststoff konfigurierbarer Dübel gemäß einem Ausführungsbeispiel der Erfindung kann aus zum Beispiel vier mehr innen liegenden Spreizstegen gebildet sein, welche fest mit Dübelfuß und Dübelkopf verbunden sind. Beim Einschrauben der Schraube (oder eines anderen Befestigungselements, zum Beispiel eines Spreiznagels oder einer Spreizniet) in den massiven Dübelkopf dreht der Dübelkopf mit und die zum Beispiel vier Stege verknoten sich innen um die Schraube.

Beispielsweise vier mehr außen liegende breite Spreizstege eines Dübels gemäß einem Ausführungsbeispiel der Erfindung können mit dem Dübelfuß fest verbunden werden, aber unterhalb des Dübelkopfes frei drehbar gelagert sein. Beim Einschrauben der Schraube in den Dübelkopf kann dieser axial in Richtung des Dübelfußes gezogen werden. Dadurch können die besagten zum Beispiel vier Spreizstege einfach nach außen geklappt werden. Es entsteht eine große Abstützfläche an der Rückseite des zum Beispiel plattenartigen Untergrundes.

Gemäß einem Ausführungsbeispiel der Erfindung ist insbesondere ein Hohlraumdübel aus Kunststoff mit ähnlicher Leistungsfähigkeit wie ein Hohlraumdübel aus Metall geschaffen. Ein wichtiger Vorteil eines Dübels gemäß einem Ausführungsbeispiel ist seine hohe Flexibilität und Funktionalität bei unterschiedlichen Untergründen, insbesondere Untergründen wie Hohlmauerwerk oder Beton (eine gewünschte Spreizwirkung kann auch in Beton erreicht werden).

Es sind zahlreiche Weiterbildungen von Ausführungsbeispielen der Erfindung möglich: So kann zum Beispiel ein Dübel gemäß einem Ausführungsbeispiel auch zweiteilig hergestellt werden, und die beiden Teil können dann ineinander gesteckt werden. Die Anzahl der ersten und/oder zweiten Spreizstege ist wählbar. Der Dübelkopf kann auch aus Metall hergestellt werden. Der Kunststoff eines Dübels gemäß einem Ausführungsbeispiel kann im Bereich einer frei drehbaren Lagerung zwischen Kopf und Spreizstegen aus einem im Vergleich zu einem anderen Teil des Dübels weicheren Kunststoff ausgebildet sein, damit sich die Schraube (oder ein anderes Befestigungselement) dort leicht einschrauben lässt und kein zu großes Drehmoment entsteht. Die zweiten Spreizstege, die nach außen klappen, können an Knickbereichen innen und/oder außen im Querschnitt reduziert sein, so dass ein kraftarmes und räumlich präzise definiertes Klappen ermöglicht wird. Eine Mitdrehsicherung am Dübelfuß kann mit Vorteil aus einem härteren Kunststoff gefertigt sein als andere Bereiche des Dübels.

**Figur 1** zeigt einen Dübel 100 gemäß einem exemplarischen Ausführungsbeispiel der Erfindung vor einem Einsetzen in einen Untergrund 118 (siehe Figur 2) und vor Einführen eines Befestigungselements 106 (siehe ebenfalls Figur 2) in eine Öffnung 104 des Dübels 100. **Figur 2** zeigt den Dübel 100 gemäß Figur 1 nach einem Einsetzen in ein Bohrloch in dem Untergrund 118 und nach Eindrehen des hier als Schraube ausgebildeten Befestigungselements 106 in eine Öffnung 104 und bis über einen Kopf 108 des Dübels 100 hinausgehend. Der Dübel 100 ist als Hohlraumdübel (d.h. zum Verankern in einem Untergrund 118 mit makroskopischem Hohlraum 196) ausgebildet und besteht aus Kunststoff.

Genauer gesagt zeigt Figur 2 eine Montageanordnung 136 mit einem Montagekit 134 und einem Untergrund 118 im montierten Zustand. Das Montagekit 134 ist aus dem Dübel 100 und dem als Schraube ausgebildeten Befestigungselement 106 in dem Dübel 100 aufgebaut. Figur 2 zeigt, wie der Dübel 100 in den Untergrund 118 eingeführt ist und das Befestigungselement 106 in den Dübel 100 eingeführt ist. Der Untergrund 118 ist dabei ein Hohlkörper, der eine Platte 194 mit dahinter angeordnetem Hohlraum 196 aufweist. Gemäß Figur 2 sind ersten Spreizstege 112 des Dübels 100 in dem Untergrund 118 miteinander verknotet und sind zweite Spreizstege 114 des Dübels 100 in dem Untergrund 118 umgeklappt.

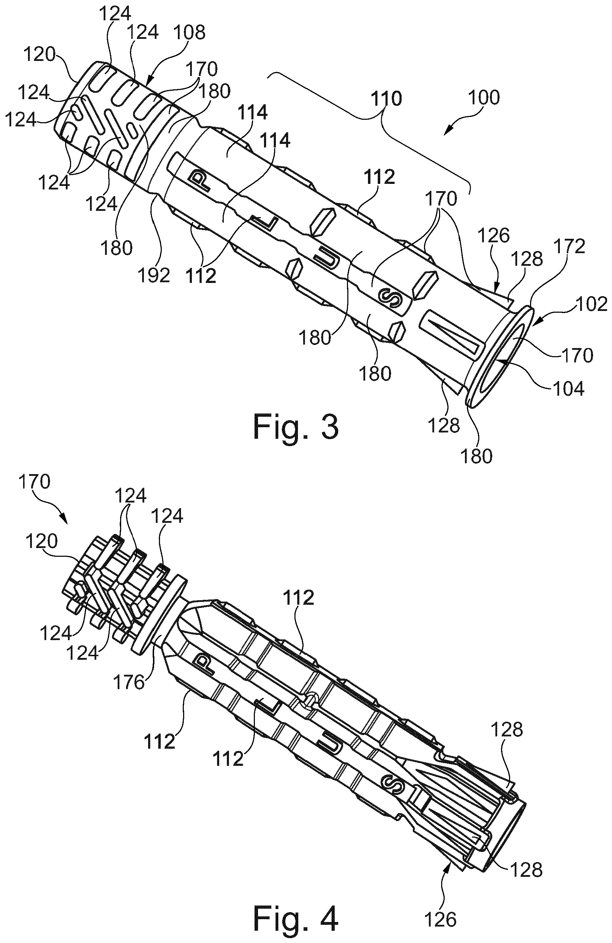

Der dargestellte Dübel 100 ist als Kunststoffdübel ausgebildet, d.h. besteht ausschließlich aus Kunststoff. Der Dübel kann durch Spritzgießen einer ersten Spritzgusskomponente 170 (entsprechend Figur 4) und durch nachfolgendes Überspritzen der ersten Spritzgusskomponente 170 mit einer zweiten Spritzgusskomponente 180 (entsprechend Figur 5) hergestellt werden. Kunststoffe der ersten Spritzgusskomponente 170 und der zweiten Spritzgusskomponente 180 können identisch oder unterschiedlich sein.

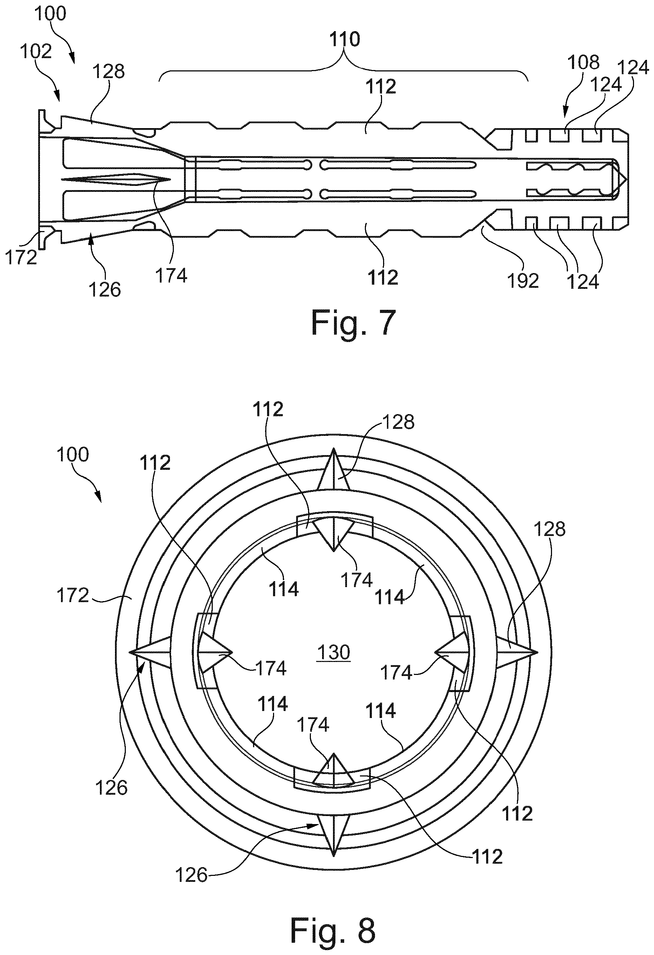

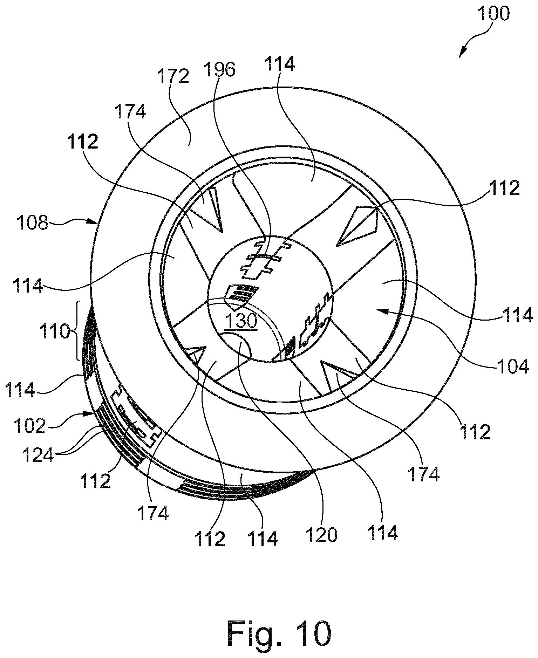

Der Dübel 100 weist als ersten Endabschnitt einen Fuß 102 mit einem außenseitigen ringförmigen Kragen 172 und einer Öffnung 104 zum Einführen eines vorzugsweise als Schraube ausgebildeten und in Figur 2 dargestellten Befestigungselements 106 auf. Die Öffnung 104 an der Außenseite des Dübels 100 im Bereich des Fußes 102 mündet im Inneren des Dübels 100 in einen Schraubkanal bzw. Aufnahmekanal 130 (siehe Figur 8 und Figur 10) zum Aufnehmen des Befestigungselements 106. An seiner Außenseite hat der Fuß 102 eine Mitdrehsicherung 126 zum Vermeiden eines Mitdrehens des Fußes 102 des Dübels 100 bei einem drehenden Einbringen eines als Schraube ausgebildeten Befestigungselements 106 in die Öffnung 104 und nachfolgend in den Aufnahmekanal 130 und in den Kopf 108. Die Mitdrehsicherung 126 ist in dem dargestellten Ausführungsbeispiel durch vier in Umfangsrichtung außenseitig verteilt angeordnete und radial über eine Mantelfläche des Dübels 100 überstehende Dorne 128 (siehe Figur 3, zum Beispiel aus Hartkunststoff) mit scharfen Schneidkanten ausgebildet. Diese Schneidkanten können sich nach Einführen des Dübels 100 in ein Bohrloch (oder dergleichen) in dem Untergrund 118 (siehe Figur 2) in den Untergrund 118 eingraben und dadurch einen Verdrehschutz bewerkstelligen.

Ferner weist der Dübel 100 als zweiten Endabschnitt, der dem Fuß 102 gegenüberliegt, den kappenförmigen Kopf 108 am Einsteckende des Dübels 100 auf. Der kappenförmige und daher an sich geschlossene Kopf 108 weist in einer distalen Stirnplatte eine Sollbruchstelle 120 in Form einer linienhaften mechanischen Schwächungslinie auf. Bei Einbringen des Befestigungselements 106, insbesondere bei Einschrauben einer Schraube, in die Öffnung 104 bzw. den zugehörigen Aufnahmekanal 130 des Dübels 100 wird die Sollbruchstelle 120 von der Spitze des Befestigungselements 106 unter Öffnung der Stirnfläche des Kopfes 108 aufgebrochen. Anders ausgedrückt kann ein Ende des Befestigungselements 106 die Sollbruchstelle 120 definiert zerstören und dadurch durch den Kopf 108 des Dübels 100 hindurchtreten (vergleiche Figur 2). Ferner weist der Kopf 108 in einem hohlzylindrischen Abschnitt Dehnungsfugen 122 (vgl. Figur 5) auf, die mit Rippen 124 gefüllt sind. Die Rippen 124 sind aus demselben Material und in demselben Herstellungsverfahren ausgebildet wie unten beschriebene erste Spreizstege 112. Ein Teil der Rippen 124 erstreckt sich orthogonal zu der Axialrichtung des Dübels 100. Ein anderer Teil der Rippen 124 in den Dehnungsfugen 122 verläuft in einem spitzen Winkel schräg zu der Axialrichtung des Dübels 100.

Darüber hinaus ist ein Spreizbereich 110 zwischen dem Fuß 102 und dem Kopf 108 angeordnet und mit einer Mehrzahl von in Umfangsrichtung bündig bzw. unmittelbar aneinander anliegenden, aber getrennten ersten Spreizstegen 112 und zweiten Spreizstegen 114 versehen. Der Spreizbereich 110 ist jener Bereich des Dübels 100, der nach Einbringen des Dübels 100 in den als Hohlkörper ausgebildeten Untergrund 118 (siehe Figur 2) und nach Einbringen des als Schraube ausgebildeten Befestigungselements 106 (siehe ebenfalls Figur 2) in die Öffnung 104 aufspreizt. Hingegen erfährt weder der Fuß 102 noch der Kopf 108 bei der Montage des Dübels 100 samt Befestigungselement 106 eine Spreizung.

Zum Herstellen des Dübels 100 kann zunächst die erste Spritzgusskomponente 170 durch ein erstes Spritzgussverfahren unter Verwendung eines ersten Spritzgusswerkzeugs hergestellt werden. Dabei werden auch die ersten Spreizstege 112 gebildet. Nachfolgend kann die zweite Spritzgusskomponente 180 durch ein zweites Spritzgussverfahren unter Verwendung eines zweiten Spritzgusswerkzeugs hergestellt werden, wodurch auch die zweiten Spreizstege 114 gebildet werden. Hierbei kann die erste Spritzgusskomponente 170 durch die zweite Spritzgusskomponente 180 zum Teil überspritzt werden. Als Ergebnis werden die ersten und zweiten Spreizstege 112, 114 enthalten, die zwar mit Berührkontakt aneinander anliegen können, aber getrennte Körper sind, die bei Einbringen des Befestigungselements 106 in den Dübel 100 auch getrennt voneinander verknoten bzw. umklappen können. Die zweiten Spreizstege 114 können radial etwas weiter außen angeordnet sein als die ersten Spreizstege 112. Die ersten Spreizstege 112 und die zweiten Spreizstege 114 können aus unterschiedlichen Materialien oder aus dem gleichen Material hergestellt sein und können in Umfangsrichtung des Dübels 100 alternierend angeordnet sein. Die ersten Spreizstege 112 und die zweiten Spreizstege 114 können zueinander formschlüssig ausgebildet sein. Dadurch kann der Spreizbereich 110 in Umfangsrichtung spaltfrei geschlossen sein.

Die ersten Spreizstege 112 dienen dazu, bei Einführen des Befestigungselements 106 in die Öffnung 104 in dem Untergrund 118 miteinander zu verknoten und dabei ein radial aufgeweitetes Knäuel zu bilden (siehe Figur 2). Die ersten Spreizstege 112 sind zu diesem Zweck fest mit dem Fuß 102 und fest mit dem Kopf 108 verbunden. Genauer gesagt können die ersten Spreizstege 112 derart mit dem Fuß 102 und mit dem Kopf 108 verbunden sein, dass bei einem drehenden Einführen des Befestigungselements 106 in die Öffnung 104 und dann in den Kopf 108 der Kopf 108 mitdreht und dadurch die ersten Spreizstege 112 verdrillen und schließlich miteinander verknoten.

Die zweiten Spreizstege 114 klappen bei Einführen des Befestigungselements 106 in die Öffnung 104 in dem Untergrund 118 um. Hierfür sind die zweiten Spreizstege 114 fest mit dem Fuß 102 verbunden und gegenüber dem Kopf 108 frei drehbar ausgebildet. Präziser ausgedrückt können die zweiten Spreizstege 114 derart mit dem Fuß 102 verbunden und von dem Kopf 108 getrennt sein, dass bei einem drehenden Einführen des Befestigungselements 106 in die Öffnung 104 und dann in den Kopf 108 der Kopf 108 axial in Richtung des Fußes 102 gezogen wird und dadurch die zweiten Spreizstege 114 um drei Klappachsen 187 umklappen, die allesamt senkrecht zur Papierebene von Figur 2 verlaufen und von denen jede einer von drei Sollknickstellen 196 eines jeweiligen zweiten Spreizstegs 114 zugeordnet ist. Figur 2 zeigt also auch, dass die zweiten Spreizstege 114 drei Sollknickstellen 196 aufweisen, an denen das Umklappen erfolgt.

Wie in Figur 1 gezeigt, ist ein frei drehbarer Bereich des Dübels 100 im Bereich einer Einschnürung oder Engstelle 192 lokal weicher ausgebildet (zum Beispiel aus Weichkunststoff gebildet) als in anderen Dübelbereichen. Mit anderen Worten weist der Dübel 100 eine ringförmige Engstelle 192 zwischen dem Kopf 108 und dem Spreizbereich 110 auf, die räumlich einem Drehlager des Dübels 100 entspricht.

Figur 2 zeigt das Ergebnis des Durchführens eines Verfahrens zum Montieren des Dübels 100 gemäß Figur 1 in dem Untergrund 118. Bei dem Verfahren wird das Befestigungselement 106 in die Öffnung 104 des Dübels 100 derart eingeführt, dass die ersten Spreizstege 112 in dem Untergrund 118 verknoten und simultan die zweiten Spreizstege 114 in dem Untergrund 118 umklappen. Da die ersten Spreizstege 112 mit dem Kopf 108 und mit dem Fuß 102 starr verbunden sind, führt ein Eindrehen des Befestigungselements 116 in die Öffnung 104 des drehfesten Fußes 102 und schließlich in den mitdrehenden Kopf 108 dazu, dass sich die ersten Spreizstege 102 in dem Hohlraum 196 hinter der Platte 194 des Untergrunds 118 verdrehen und dabei miteinander verknoten. Ferner wird der Kopf 108 beim Einbringen des Befestigungselements 106 in Richtung Platte 194 gezogen, während der Fuß 102 mit seiner Mitdrehsicherung 126 verdrehgeschützt ist. Dadurch werden auch die zweiten Spreizstege 114 (die von dem Kopf 108 getrennt ausgebildet sind und nur mit dem Fuß 102 fest verbunden sind) in Richtung Platte 194 gezogen und klappen dabei an ihren Sollknickstellen 196 um.

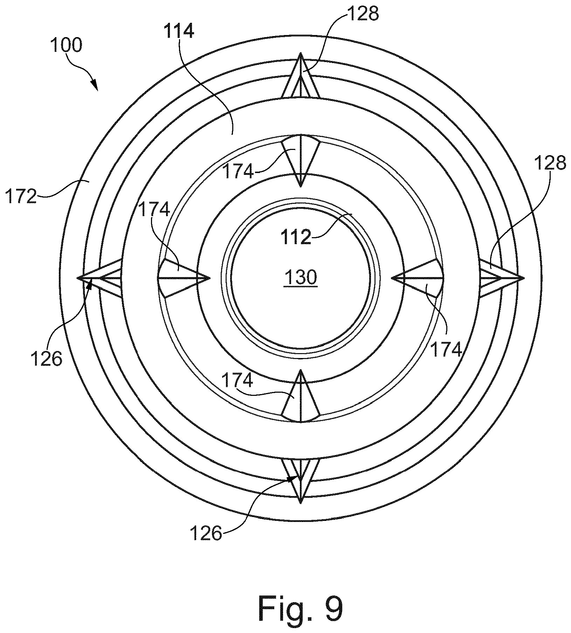

**Figur 3** zeigt eine räumliche Ansicht eines Dübels 100 gemäß einem exemplarischen Ausführungsbeispiel der Erfindung, der aus zwei Spritzgusskomponenten 170, 180 entsprechend zweier getrennter Spritzgussverfahren aufgebaut ist. **Figur 4** zeigt die erste Spritzkomponente 170 des Dübels 100 gemäß Figur 3 ohne die zweite Spritzgusskomponente 180. **Figur 5** zeigt die zweite erste Spritzkomponente 180 des Dübels 100 gemäß Figur 3 ohne die erste Spritzgusskomponente 170. **Figur 6** zeigt eine Seitenansicht des Dübels 100 gemäß Figur 3. **Figur 7** zeigt einen axialen Schnitt des Dübels 100 gemäß Figur 3. **Figur 8** zeigt eine Schnittansicht des Dübels 100 gemäß Figur 3 bis Figur 7 entlang einer in Figur 6 dargestellten Schnittebene A-A. **Figur 9** zeigt eine Schnittansicht des Dübels 100 gemäß Figur 3 bis Figur 7 entlang einer in Figur 6 dargestellten Schnittebene B-B. **Figur 10** zeigt eine räumliche Ansicht in ein Inneres des Dübels 100 gemäß Figur 3 bis Figur 9.

In Figur 4 ist mit Bezugszeichen 176 eine Trennhülse zwischen den ersten Spreizstegen 112 und der Komponente des Kopfs 108 dargestellt, die von der ersten Spritzgusskomponente 170 gebildet wird. Angrenzend an die Trennhülse 176 befindet sich der Teil des Spreizbereichs 110, der durch die ersten Spreizstege 112 gebildet ist und die miteinander verbunden sind. Die Trennhülse 176 kann als trennende Hülse ausgebildet sein. Es ist optional möglich, im Bereich des Kopfs 108 eine Hülse zu bilden, die drehbar mit den Spreizschenkeln 114 der zweiten Spritzkomponente 180 verbunden ist.

Zum Herstellen der Spreizstege 114, 112 werden zunächst mittels eines ersten Spritzgussverfahrens und mittels eines ersten Spritzgusswerkzeugs die ersten Spreizstege 112 und die weiteren Komponenten des Dübels 100 gebildet, die in Figur 4 gezeigt sind. Nachfolgend werden mittels eines zweiten Spritzgussverfahrens und mittels eines zweiten Spritzgusswerkzeugs die zweiten Spreizstege 114 und die weiteren Komponenten des Dübels 100 gebildet, die in Figur 5 gezeigt sind. Hierbei kann die zweite Spritzkomponente 180 über der ersten Spritzgusskomponente 170 aufgespritzt werden. Im Kopfbereich ist die erste Spritzkomponente 170 von der in Figur 5 dargestellten zweiten Spritzkomponente 180 physisch bzw. mechanisch getrennt.

In Figur 5 ist mit Bezugszeichen 178 eine physische bzw. mechanische Trennung zwischen den zweiten Spreizstegen 114 und der Komponente des Kopfs 108 dargestellt, der von der zweiten Spritzgusskomponente 180 gebildet wird. Angrenzend an die Trennstelle 178 befindet sich der Teil des Spreizbereichs 110, der durch die zweiten Spreizstege 114 gebildet ist. Angrenzend an die Trennstelle 178 sind die zweiten Spreizstege 114 miteinander verbunden. Die Komponente des Kopfs 108, die von der zweiten Spritzgusskomponente 180 gebildet wird, kann alternativ auch ersatzlos weggelassen werden, da dieser Bereich anschaulich eine Hülle für die entsprechende Kopfkomponente der ersten Spritzkomponente 170 bildet und zu der Spreizfunktion nichts Zwingendes beiträgt.

Figur 6 kann entnommen werden, dass die ersten Spreizstege 112 und die zweiten Spreizstege 114 miteinander verzahnt sein können. Zueinander invers geformte Zahnstrukturen der Spreizstege 112, 114 können derart konfiguriert werden, dass in Axialrichtung (die einer Einführrichtung eines Befestigungselements 106 in die Öffnung 104 des Dübels 100 entspricht und senkrecht zu einer Papierebene gemäß Figur 8 und Figur 9 verläuft) des Dübels 100 abwechselnd breitere Abschnitte 140 und schmälere Abschnitte 142 gebildet sind.

In Figur 8 und in Figur 9 zu erkennen sind Spreizdorne 174 an den ersten Spreizstegen 112. Die Spreizdorne 174 erstrecken sich in die Öffnung 104 bzw. bis in den Aufnahmekanal 130 hinein.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Dübel (100) zum Einbringen in einen Untergrund (118), wobei der Dübel (100) aufweist:
einen Fuß (102) mit einer Öffnung (104) zum Einführen eines Befestigungselements (106);
einen Kopf (108); und
einen Spreizbereich (110) zwischen dem Fuß (102) und dem Kopf (108),
**dadurch gekennzeichnet, dass**
der Spreizbereich (110) Folgendes aufweist:
erste Spreizstege (112), die bei Einführen des Befestigungselements (106) in die Öffnung (104) zum Verknoten in einem Hohlraum (196) in dem Untergrund (118) ausgebildet sind; und
zweite Spreizstege (114), die bei Einführen des Befestigungselements (106) in die Öffnung (104) zum Umklappen in dem Hohlraum (196) in dem Untergrund (118) ausgebildet sind;
wobei die ersten Spreizstege (112) Teil einer ersten Spritzgusskomponente (170) des Dübels (100) sind und die zweiten Spreizstege (114) Teil einer zweiten Spritzgusskomponente (180) des Dübels (100) sind; und
wobei an einer Trennstelle (178) eine mechanische Trennung zwischen den zweiten Spreizstegen (114) und einer von der zweiten Spritzgusskomponente (180) gebildeten Komponente des Kopfs (108) gebildet ist.

2. Dübel (100) gemäß Anspruch 1, aufweisend zumindest eines der folgenden Merkmale:
wobei angrenzend an die Trennstelle (178) die zweiten Spreizstege (114) miteinander verbunden sind;
wobei die ersten Spreizstege (112) fest mit dem Fuß (102) und fest mit dem Kopf (108) verbunden sind, wobei insbesondere die ersten Spreizstege (112) derart mit dem Fuß (102) und mit dem Kopf (108) verbunden sind, dass, bei einem drehenden Einführen des Befestigungselements (106) in die Öffnung (104) und dann in den Kopf (108), der Kopf (108) mitdreht und dadurch die ersten Spreizstege (112) verknoten.

3. Dübel (100) gemäß einem der Ansprüche 1 bis 2, wobei die zweiten Spreizstege (114) fest mit dem Fuß (102) verbunden sind und gegenüber dem Kopf (108) frei drehbar ausgebildet sind.

4. Dübel (100) gemäß Anspruch 3, aufweisend zumindest eines der folgenden Merkmale:
wobei die zweiten Spreizstege (114) derart mit dem Fuß (102) verbunden und von dem Kopf (108) getrennt sind, dass bei einem drehenden Einführen des Befestigungselements (106) in die Öffnung (104) und dann in den Kopf (108) der Kopf (108) axial in Richtung des Fußes (102) gezogen wird und dadurch die zweiten Spreizstege (114) radial nach außen umklappen;
wobei ein frei drehbarer Bereich zwischen den zweiten Spreizstegen (114) und dem Kopf (108) lokal mechanisch geschwächt ist, insbesondere weicher ausgebildet ist als angrenzende Bereiche des Dübels (100).

5. Dübel (100) gemäß einem der Ansprüche 1 bis 4, aufweisend zumindest eines der folgenden Merkmale:
ausgebildet als Hohlraumdübel;
wobei der Dübel (100) Kunststoff aufweist oder daraus besteht;
wobei der Kopf (108) ein Metall aufweist oder daraus besteht, und insbesondere ein Rest des Dübels (100) Kunststoff aufweist oder daraus besteht;
wobei die zweiten Spreizstege (114) mindestens eine Sollknickstelle (196) aufweisen, an der das Umklappen erfolgt;
wobei sich die zweiten Spreizstege (114) radial weiter nach außen erstrecken als die ersten Spreizstege (112) und/oder die zweiten Spreizstege (114) breiter sind als die ersten Spreizstege (112);
aufweisend eine, insbesondere ringförmige, Engstelle (192) zwischen dem Kopf (108) und dem Spreizbereich (110);
wobei die ersten Spreizstege (112) und die zweiten Spreizstege (114) aus unterschiedlichen Materialien oder aus dem gleichen Material hergestellt sind;
wobei die ersten Spreizstege (112) und die zweiten Spreizstege (114) in Umfangsrichtung alternierend angeordnet sind;
wobei der Spreizbereich (110) in Umfangsrichtung spaltfrei geschlossen ist;
wobei der Kopf (108) geschlossen ist, wobei insbesondere der Kopf (108) eine Sollbruchstelle (120) aufweist, die bei Einbringen eines Befestigungselements (106) in den Dübel (100) unter Öffnung (104) des Kopfes (108) aufbrechbar ist;
wobei der Kopf (108) Dehnungsfugen (122) aufweist, die mit Rippen (124) gefüllt sind;
wobei der Fuß (102) eine Mitdrehsicherung (126) aufweist, insbesondere ausgebildet als in Umfangsrichtung außenseitig verteilt angeordnete Dorne (128);

6. Dübel (100) gemäß einem der Ansprüche 1 bis 5, wobei die zweite Spritzgusskomponente (180) auf die erste Spritzgusskomponente (170) aufgespritzt ist.

7. Dübel (100) gemäß einem der Ansprüche 1 bis 6, wobei die ersten Spreizstege (112) Teil eines ersten Steckelements des Dübels (100) sind und die zweiten Spreizstege (114) Teil eines auf das erste Steckelement aufgesteckten zweiten Steckelements des Dübels (100) sind.

8. Verfahren zum Herstellen eines Dübels (100) zum Einbringen in einen Untergrund (118), wobei das Verfahren aufweist:
Bilden eines Fußes (102) mit einer Öffnung (104) zum Einführen eines Befestigungselements (106);
Bilden eines Kopfs (108);
Bilden eines Spreizbereichs (110) zwischen dem Fuß (102) und dem Kopf (108),
**dadurch gekennzeichnet, dass**
das Bilden des Spreizbereichs (110) eine Ausbildung von Folgendem aufweist:
erste Spreizstege (112), die bei Einführen des Befestigungselements (106) in die Öffnung (104) zum Verknoten in einem Hohlraum (196) in dem Untergrund (118) ausgebildet sind; und
zweite Spreizstege (114), die bei Einführen des Befestigungselements (106) in die Öffnung (104) zum Umklappen in dem Hohlraum (196) in dem Untergrund (118) ausgebildet sind;
Herstellen der ersten Spreizstege (112) als Teil einer ersten Spritzgusskomponente (170) des Dübels (100) und Herstellen der zweiten Spreizstege (114) als Teil einer zweiten Spritzgusskomponente (180) des Dübels (100); und
Bilden einer mechanischen Trennung zwischen den zweiten Spreizstegen (114) und einer von der zweiten Spritzgusskomponente (180) gebildeten Komponente des Kopfs (108) an einer Trennstelle (178).

9. Verfahren gemäß Anspruch 8, wobei das Verfahren ein Herstellen der ersten Spreizstege (112) und der zweiten Spreizstege (114) aufweist, bei dem:
zunächst die ersten Spreizstege (112) gebildet werden; und
nachfolgend die zweiten Spreizstege (114) gebildet werden.

10. Verfahren gemäß Anspruch 8 oder 9, wobei bei dem Verfahren die ersten Spreizstege (112) mittels eines ersten Spritzgussverfahrens und nachfolgend die zweiten Spreizstege (114) mittels eines zweiten Spritzgussverfahrens hergestellt werden, insbesondere mittels Überspritzens von mittels des ersten Spritzgussverfahrens ausgebildetem Material des Dübels (100).

11. Verfahren zum Montieren eines Dübels (100) gemäß einem der Ansprüche 1 bis 7 in einem Untergrund (118), wobei das Verfahren bei einem, insbesondere drehenden, Einführen des Befestigungselements (106), insbesondere einer Schraube, in die Öffnung (104) **dadurch gekennzeichnet ist, dass** es folgende Schritte aufweist:
Verknoten der ersten Spreizstege (112) in einem Hohlraum (196) in dem Untergrund (118); und
Umklappen der zweiten Spreizstege (114) in dem Hohlraum (196) in dem Untergrund (118).

12. Montagekit (134), aufweisend:
einen Dübel (100) und ein Befestigungselement (106), insbesondere eine Schraube, zum, insbesondere drehenden, Einführen in den Dübel (100),
**dadurch gekennzeichnet dass** der Dübel (100) gemäß einem der Ansprüche 1 bis 7 ausgeführt ist.

13. Montageanordnung (136), aufweisend:
einen Untergrund (118),
**gekennzeichnet durch**
ein Montagekit (134) gemäß Anspruch 12;
wobei der Dübel (100) in den Untergrund (118) eingeführt ist und das Befestigungselement (106) in den Dübel (100) eingeführt ist, insbesondere zumindest bis in den Kopf (108) des Dübels (100) hineinreichend eingeführt ist.

14. Montageanordnung (136) gemäß Anspruch 13, wobei der Untergrund (118) ein Hohlkörper ist, insbesondere eine Platte (194) mit dahinter angeordnetem Hohlraum (196) aufweist.

15. Montageanordnung (136) gemäß Anspruch 13 oder 14, wobei die ersten Spreizstege (112) in dem Untergrund (118) miteinander verknotet sind und die zweiten Spreizstege (114) in dem Untergrund (118) umgeklappt sind.

## Claims

1. Wall plug (100) for inserting into a substrate (118), whereby the wall plug (100) comprises:
a foot (102) with an opening (104) for inserting of a fixing element (106);
a head (108); and
an strutting region (110) between the foot (102) and the head (108),
**characterized in that**
the strutting region (110) comprises the following:
first strutting bars (112) formed to knot in a cavity (196) in the substrate (118) upon inserting of the fixing element (106) into the opening (104); and
second strutting bars (114) formed for folding in the cavity (196) in the substrate (118) upon insertion of the fixing element (106) into the opening (104);
wherein the first strutting bars (112) are a part of a first injection molded component (170) of the wall plug (100) and the second strutting bars (114) are a part of a second injection molded component (180) of the wall plug (100); and
wherein a mechanical separation is formed at a separation point (178) between the second strutting bars (114) and a component of the head (108) formed by the second injection molded component (180).

2. Wall plug (100) according to claim 1, comprising at least one of the following featu res:
wherein the second strutting bars (114) are connected to each other adjacent to the separation point (178),
wherein the first strutting bars (112) firmly connected with the foot (102) and
firmly with the head (108), wherein in particular the first strutting bars (112) are connected with the foot (102) and with the head (108) in such a way that upon rotatably inserting the fixing element (106) in the opening (104) and then in the head (108), the head (108) rotates along and thereby the strutting bars (112) knot.

3. Wall plug (100) according to one of the claims 1 to 2, wherein the second strutting bars (114) are firmly connected with the foot (102) and are formed to be freely rotatable relative to the head (108).

4. Wall plug (100) according to claim 3, comprising at least one of the following featu res:
wherein the second strutting bars (114) are connected to the foot (102) and separated from the head (108) in such a way that, upon rotationally inserting of the fixing element (106) into the opening (104) and then into the head (108), the head (108) is pulled axially in direction to the foot (102) and thereby causing the second strutting bars (114) to fold radially outwardly;
wherein a freely rotatable section between the second strutting bars (114) and the head (108) is locally mechanically weakened, in particular is formed softer than the adjacent section of the wall plug (100).

5. Wall plug (100) according to one of the claims 1 to 4, comprising at least one of the following features:
formed as a cavity dowel;
wherein the wall plug (100) comprises or consists of plastic;
wherein the head (108) comprises or consists of a metal, and in particular a remainder of the wall plug (100) comprises or consists of plastic;
wherein the second strutting bars (114) comprise at least one predetermined kink point (196) at which the folding takes place;
wherein the second strutting bars (114) extend radially further outwardly than the first strutting bars (112) and/or the second strutting bars (114) are wider than the first strutting bars (112);
having a, in particular annular, constriction (192) between the head (108) and the spreading region (110);
wherein the first strutting bars (112) and the second strutting bars (114) are made of different materials or of the same material;
wherein the first strutting bars (112) and the second strutting bars (114) are arranged alternately in circumferential direction;
wherein the strutting section (110) is closed gap-free in circumferential direction;
wherein the head (108) is closed, wherein in particular the head (108) has a predetermined breaking point (120) which is brokable open when the fixing element (106) is inserted into the wall plug (100) with the opening (104) of the head (108);
wherein the head (108) has expansion gaps (122) filled with ribs (124);
wherein the foot (102) has a co-rotation lock (126), in particular formed as mandrels (128) distributed on the outside in circumferential direction;

6. Wall plug (100) according to one of the claims 1 to 5, wherein the second injection-molded component (180) is injection-molded onto the first injection-molded component (170).

7. Wall plug (100) according to one of claims 1 to 6, wherein the first strutting bars (112) are a part of the first plug element of the wall plug (100) and the second strutting bars (114) are a part of a second plug element of the wall plug (100) plugged onto the first plug element.

8. Method of manufacturing a wall plug (100) for insertion into a substrate (118), wherein the method comprises:
Forming a foot (102) having an opening (104) for inserting of the fixing element (106);
Forming a head (108);
Forming a strutting section (110) between the foot (102) and the head (108);
**characterized in that**
the forming of strutting section (110) comprises a formation of the following:
first strutting bars (112) formed for knotting in a cavity (196) in the substrate (118) upon inserting of the fixing element (106) into the opening (104); and second strutting bars (114) formed for folding in the cavity (196) in the substrate (118) upon inserting of the fixing element (106) into the opening (104);
forming the first strutting bars (112) as part of a first injection molded component (170) of the wall plug (100) and forming the second strutting bars (114) as part of a second injection molded component (180) of the wall plug (100); and
forming a mechanical separation between the second strutting bars (114) and a component of the head (108) formed by the second injection molded component of the head (108) at a separation location (178).

9. Method according to claim 8, the method comprising a manufacturing the first strutting bars (112) and the second strutting bars (114), in which:
first forming the first strutting bars (112); and
subsequently forming the second strutting bars (114).

10. Method according to claim 8 or 9, in which method the first strutting bars (112) are produced by means of a first injection molding process and subsequently the second strutting bars (114) are produced by means of a second injection molding process, in particular by means of overmolding material of the wall plug (100) formed by means of the first injection molding process.

11. Method of mounting a wall plug (100) according to one of claims 1 to 7 in a substrate (118), whereby the method upon an, in particular rotationally inserting, of the fixing element (106), in particular a
screw, into the opening (104), is **characterized in that** it comprises the following steps:
knotting the first strutting bars (112) in the cavity (196) in the substrate (118); and
folding down the second strutting bars (114) in the cavity (196) in the substrate (118).

12. Mounting kit (134) comprising:
a wall plug (100) and
a fixing element (106), in particular a screw, for,
in particular rotatingly, inserting into the wall plug (100), **characterized in that** the wall plug (100) is designed according to one of the claims 1 to 7.

13. Mounting assembly (136), comprising:
a substrate (118),
**characterized by**
a mounting kit (134) according to claim 12;
wherein the wall plug (100) is inserted into the substrate (118) and the fixing element (106) is inserted into the wall plug (100), in particular is inserted at least reaching in till the head (108) of the wall plug (100).

14. Mounting assembly (136) according to the claim 13, wherein the substrate (118) is a hollow body, in particular a plate (194) with a cavity (196) arranged therebehind.

15. Mounting assembly (136) according to the claim 13 or 14, wherein the first strutting bars (112) are knotted together in the substrate (118), and the second strutting bars (114) are folded in the substrate (118).

## Revendications

1. Goujon (100) pour l'introduction dans un sol (118), dans lequel le goujon (100) présente :
un pied (102) avec une ouverture (104) pour l'introduction d'un élément de fixation (106) ;
une tête (108) ; et
une zone d'écartement (110) entre le pied (102) et la tête (108),
**caractérisé en ce que**
la zone d'écartement (110) présente ce qui suit :
des premières branches d'écartement (112) qui sont réalisées lors de l'insertion de l'élément de fixation (106) dans l'ouverture (104) pour le nouage dans un espace creux (196) dans le sol (118) ; et
des secondes branches d'écartement (114) qui sont réalisées lors de l'insertion de l'élément de fixation (106) dans l'ouverture (104) pour le rabattement dans l'espace creux (196) dans le sol (118) ;
dans lequel les premières branches d'écartement (112) font partie d'un premier composant de moulage par injection (170) du goujon (100) et les secondes branches d'écartement (114) font partie d'un second composant de moulage par injection (180) du goujon (100) ; et
dans lequel une séparation mécanique est formée entre les secondes branches d'écartement (114) et un composant formé par le second composant de moulage par injection (180) de la tête (108) au niveau d'un point de séparation (178).

2. Goujon (100) selon la revendication 1, présentant au moins une des caractéristiques suivantes :
**caractérisé en ce que** les secondes branches d'écartement (114) sont reliées entre elles de manière contiguë au point de séparation (178) ;
dans lequel les premières branches d'écartement (112) sont reliées fixement au pied (102) et fixement à la tête (108), dans lequel en particulier les premières branches d'écartement (112) sont reliées au pied (102) et à la tête (108) de telle manière que lors d'une insertion rotative de l'élément de fixation (106) dans l'ouverture (104) et ensuite dans la tête (108) la tête (108) tourne et ainsi les premières branches d'écartement (112) se nouent.

3. Goujon (100) selon l'une des revendications 1 à 2, **caractérisé en ce que** les secondes branches d'écartement (114) sont reliées fixement au pied (102) et sont réalisées de manière à pouvoir tourner librement par rapport à la tête (108).

4. Goujon (100) selon la revendication 3, présentant au moins une des caractéristiques suivantes :
**caractérisé en ce que** les secondes branches d'écartement (114) sont reliées au pied (102) et sont séparées de la tête (108) de telle manière que lors d'une insertion rotative de l'élément de fixation (106) dans l'ouverture (104) et ensuite dans la tête (108), la tête (108) soit tirée axialement en direction du pied (102) et ainsi les secondes branches d'écartement (114) se rabattent radialement vers l'extérieur ;
dans lequel une zone pouvant tourner librement est affaiblie localement mécaniquement entre les secondes branches d'écartement (114) et la tête (108), en particulier est réalisée plus molle que des zones contiguës du goujon (100).

5. Goujon (100) selon l'une des revendications 1 à 4, présentant au moins une des caractéristiques suivantes :
réalisé comme goujon à espace creux ;
**caractérisé en ce que** le goujon (100) présente une matière plastique ou s'en compose ;
dans lequel la tête (108) présente un métal ou s'en compose, et
en particulier un reste du goujon (100) présente une matière plastique ou s'en compose ;
dans lequel les secondes branches d'écartement (114) présentent au moins un point d'inflexion de consigne (196), au niveau duquel le rabattement est effectué ;
dans lequel les secondes branches d'écartement (114) s'étendent radialement plus vers l'extérieur que les premières branches d'écartement (112) et/ou les secondes branches d'écartement (114) sont plus larges que les premières branches d'écartement (112) ;
présentant un point étroit (192), en particulier annulaire, entre la tête (108) et la zone d'écartement (110) ;
dans lequel les premières branches d'écartement (112) et les secondes branches d'écartement (114) sont fabriquées en différents matériaux ou en le même matériau ;
dans lequel les premières branches d'écartement (112) et les secondes branches d'écartement (114) sont agencées en alternance dans le sens périphérique ;
dans lequel la zone d'écartement (110) est fermée sans fente dans le sens périphérique ;
dans lequel la tête (108) est fermée, dans lequel en particulier la tête (108) présente un point de rupture de consigne (120) qui peut être rompu lors de l'introduction d'un élément de fixation (106) dans le goujon (100) sous l'ouverture (104) de la tête (108) ;
dans lequel la tête (108) présente des joints de dilatation (122) qui sont remplis avec des nervures (124) ;
dans lequel le pied (102) présente une sécurité de rotation (126), en particulier réalisée comme épines (128) agencées en étant réparties côté extérieur dans le sens périphérique.

6. Goujon (100) selon l'une des revendications 1 à 5, **caractérisé en ce que** le second composant de moulage par injection (180) est injecté sur le premier composant de moulage par injection (170).

7. Goujon (100) selon l'une des revendications 1 à 6, **caractérisé en ce que** les premières branches d'écartement (112) font partie d'un premier élément d'enfichage du goujon (100) et les secondes branches d'écartement (114) font partie d'un second élément d'enfichage enfiché sur le premier élément d'enfichage du goujon (100).

8. Procédé de fabrication d'un goujon (100) pour l'introduction dans un sol (118), dans lequel le procédé présente :
la formation d'un pied (102) avec une ouverture (104) pour l'insertion d'un élément de fixation (106) ;
la formation d'une tête (108) ;
la formation d'une zone d'écartement (110) entre le pied (102) et la tête (108),
**caractérisé en ce que**
la formation de la zone d'écartement (110) présente une réalisation de ce qui suit :
des premières branches d'écartement (112) qui sont réalisées lors de l'insertion de l'élément de fixation (106) dans l'ouverture (104) pour le nouage dans un espace creux (196) dans le sol (118) ; et
des secondes branches d'écartement (114) qui sont réalisées lors de l'insertion de l'élément de fixation (106) dans l'ouverture (104) pour le rabattement dans l'espace creux (196) dans le sol (118) ;
la fabrication des premières branches d'écartement (112) comme partie d'un premier composant de moulage par injection (170) du goujon (100) et la fabrication des secondes branches d'écartement (114) comme partie d'un second composant de moulage par injection (180) du goujon (100) ; et
la formation d'une séparation mécanique entre les secondes branches d'écartement (114) et un composant formé par le second composant de moulage par injection (180) de la tête (108) au niveau d'un point de séparation (178).

9. Procédé selon la revendication 8, **caractérisé en ce que** le procédé présente une fabrication des premières branches d'écartement (112) et des secondes branches d'écartement (114), pour lequel :
tout d'abord les premières branches d'écartement (112) sont formées ; et
ensuite les secondes branches d'écartement (114) sont formées.

10. Procédé selon la revendication 8 ou 9, **caractérisé en ce que** pour le procédé les premières branches d'écartement (112) sont fabriquées au moyen d'un premier procédé de moulage par injection et ensuite les secondes branches d'écartement (114) sont fabriquées au moyen d'un second procédé de moulage par injection, en particulier au moyen de la surinjection de matériau réalisé au moyen du premier procédé de moulage par injection du goujon (100).

11. Procédé de montage d'un goujon (100) selon l'une des revendications 1 à 7 dans un sol (118), **caractérisé en ce que** le procédé est caractérisé lors d'une insertion, en particulier rotative, de l'élément de fixation (106), en particulier d'une vis, dans l'ouverture (104), **en ce qu'**il présente les étapes suivantes :
le nouage des premières branches d'écartement (112) dans un espace creux (196) dans le sol (118) ; et
le rabattement des secondes branches d'écartement (114) dans l'espace creux (196) dans le sol (118).

12. Kit de montage (134), présentant :
un goujon (100) et un élément de fixation (106), en particulier une vis, pour l'insertion, en particulier rotative, dans le goujon (100),
**caractérisé en ce que**
le goujon (100) est réalisé selon l'une des revendications 1 à 7.

13. Agencement de montage (136) présentant :
un sol (118),
**caractérisé par**
un kit de montage (134) selon la revendication 12 ;
dans lequel le goujon (100) est inséré dans le sol (118) et l'élément de fixation (106) est inséré dans le goujon (100), en particulier est inséré en s'étendant au moins jusque dans la tête (108) du goujon (100).

14. Agencement de montage (136) selon la revendication 13, **caractérisé en ce que** le sol (118) est un corps creux, en particulier présente une plaque (194) avec un espace creux (196) agencé derrière.

15. Agencement de montage (136) selon la revendication 13 ou 14, **caractérisé en ce que** les premières branches d'écartement (112) sont nouées entre elles dans le sol (118) et les secondes branches d'écartement (114) sont rabattues dans le sol (118).
